# EUROPEAN PATENT APPLICATION

(11) **EP 4 787 245 A1**
(43) Date of publication of application: **05.08.2026**
(21) Application number: 25155098.4
(22) Date of filing: 30.01.2025
(51) Int. Cl.: G06N 3/098, G06N 3/0455, G06N 20/00

(54) **FEDERATED LEARNING WITH CUSTOMER DATA PRIVACY PRESERVATION AND ENTAILMENT CHECKING**

(71) Applicant: ABB SCHWEIZ AG, 5400 Baden (CH)
(72) Inventor: SCHOCH, Nicolai, 69120 Heidelberg (DE); ASHIWAL, Virendra, 68542 Heddesheim (DE); BORRISON, Reuben, 68782 Brühl (DE)
(74) Representative: Maiwald GmbH

(57) **Abstract**

There is disclosed a method for training and using a ML model on customer engineering data with increased customer privacy preservation in an industrial context. The method comprises, in a training phase of the ML model: obtaining the customer engineering data from customer project data associated with a customer; training the ML model on the customer engineering data by using federated ML; and applying customer privacy preservation mechanisms on information inferred by the ML model. The method further comprises, when using the ML model for inference: verifying, by using an Entailment Checking method, that the information inferred by the ML model and determined by the ML model to be associated with the customer were obtained from the customer project data.

## Description

### FIELD OF THE INVENTION

The invention relates to Federated Learning with Customer Data Privacy Preservation and Entailment Checking, for example for P&A Engineering. In more detail, the invention relates to a method for training a machine learning model on customer engineering data with increased customer privacy preservation in an industrial context. The invention further relates to a data processing apparatus, a data processing system, a computer-readable medium, a computer program product and a use, in an industrial context.

### BACKGROUND

In an industrial context, Automation Engineering of a process automation system is still a very manual effort due to limited support for the interpretation and processing of process design specification documents. Even though standards for digital data exchange between process and automation engineering do exist, those formats are rarely used and consequently the immense automation potential in automation engineering cannot be lifted.

Currently, artificial intelligence and/or machine learning (AI/ML)-based models for use in an industrial context are developed to structure and formalize multimodal unstructured process design information as, for example, in PDF, Excel, and Word formats and to make it available for state-of-the-art engineering tools for the long-known "Automation of Automation".

However, such AI/ML-based models only understand a domain in which they are to be applied to a limited or labelled extend, and for such currently developed models it is needed to overcome a shortage of training data. However, at the same time, such AI/ML-based models have to obey to customers' data privacy constraints.

In more detail, to further advance the AI/ML-based models for processing a broad range of engineering design specification documents from Process Automation-Process Industries (PA-PI), with the PI being, for example, Mining, Food&Beverage, Data Centers, etc., and Process Automation-Energy Industries (PA-EN) with the EN being, for example, Oil&Gas, Chemistry/Refinery, etc., for example, the AI/ML-based models need to be trained on further customer data. So far, they only understand the domain to a limited or so-far-labelled extend, and we will need to overcome shortage of training data, while at the same time, especially in an industrial context, obeying to customers' data privacy constraints.

However, customer data privacy is an issue and blocks from further training of the AI/ML-based models.

Hence, in an industrial application context, there is the problem of how to improve AI/ML-based models for structuring and/or formalizing process design information and for making these process design information available for engineering tools, whereas at the same time customers' data privacy constraints are complied with.

Hence, there is room and need for improvement regarding the improvement of AI/ML-based models for structuring and/or formalizing process design information and for making these process design information available for engineering tools, whereas at the same time customers' data privacy constraints are complied with.

### SUMMARY

In view of the above, it is an object of the present disclosure to overcome at least part of the drawbacks available regarding the compliance of customers' data privacy constraints in the application of AI/ML-based models for structuring and/or formalizing process design information and for making these process design information available for engineering tools.

Therefore, to address one or more of these drawbacks, there is provided, in a first aspect, a computer-implemented method for training and using a machine learning (ML) model on customer engineering data with increased customer privacy preservation in an industrial context. The method comprises, in a training phase of the ML model: obtaining the customer engineering data from customer project data associated with a customer; training the ML model on the customer engineering data by using federated ML; thereby fine-tuning (it should be noted that the fine-tuning may be understood as part of the training and that the fine-tuning is optional) the ML model by using a fine-tuning method; and applying customer privacy preservation mechanisms on information inferred by the ML model. The method further comprises, when using the ML model for inference, i.e. in a usage phase of the ML model: verifying, by using an Entailment Checking method, that the information inferred by the ML model and determined by the ML model to be associated with the customer were obtained from the customer project data. In more detail, verifying that the information inferred by the ML model and determined by the ML model to be associated with the customer were obtained from the customer project data and not from another customer's project data.

It shall be noted that the expression "training phase" means that the ML model is trained, wherein the expression "when using the ML model for inference" means that the trained ML model, i.e. the ML model obtained as a result from the training phase, is applied on several tasks, for example on such verifying as outlined in the first aspect.

Federated ML is commonly known. For example, Federated ML may be understood as a ML setting where several entities participate in solving a learning problem. The several entities do not exchange data with each other, at least not directly.

Several fine-tuning methods as such are commonly known, as outlined below in more detail.

Several customer privacy preservation mechanisms as such are commonly known, as outlined below in more detail.

The expression "inferred information" may also be understood as "derived information" or "gained information".

Several Entailment Checking methods as such are commonly known, as outlined below in more detail.

The method according to the first aspect is advantageous in that it may participate in enabling to overcome the problem of limited data for training of a ML model while at the same time obeying to the given constraints, like customer privacy constraints in an industrial context for example. It is thus enabled to train a ML model on data from different customers, for example distributed customers (in the meaning of probability distributed customers or customer data) and/or customers from EN and PI, by using Federated Learning, which simplifies access to private data. Furthermore, it is enabled to efficiently handle training efforts by using fine-tuning methods, for example Parameter-efficient Fine-Tuning (PEFT) methods, which dramatically reduces bandwidth without exposing the entirety of model weights of the ML model to be fine-tuned, but instead only the "PEFT-Low-Rank-Adapters" or similar. Moreover, it is enabled to guarantee customer data privacy, for example in that during inference of the ML model (i.e. in the usage phase) no data from a customer A (or a first customer), on which the ML model was trained, is leaked to a customer B (or a second customer).

It should be noted that a customer A may also be referred to as a first customer (and vice versa) and that a customer B may also be referred to as a second customer (and vice versa).

According to several examples of the present disclosure, the fine-tuning of the ML model by using a fine-tuning method may comprise fine-tuning the ML model by using one of Parameter-Efficient Fine-Tuning (PEFT), Low Rank Adaptation-PEFT (LoRA-PEFT), and pruning.

Hence, different alternatives are available and may be selected as appropriate/suitable that enable to efficiently handle training efforts, which dramatically reduces bandwidth without exposing the entirety of model weights of the ML model to be fine-tuned.

According to several examples of the present disclosure, the applying the customer privacy preservation mechanisms may comprise applying one of Differential Privacy (DP), Homomorphic Encryption, and AutoEncoders.

Regarding Differential Privacy (DP), it shall be noted that DP is a robust mathematical framework designed to protect individual privacy while allowing for the analysis of datasets. It is particularly relevant in ML, where models often rely on sensitive data for training. DP ensures that the inclusion or exclusion of a single individual's data does not significantly affect the output of a model, thus safeguarding personal or generally confidential information.

Hence, different alternatives are available and may be selected as appropriate/suitable that enable to protect a customer's individual privacy.

According to several examples of the present disclosure, the verifying by using the Entailment Checking method may comprise verifying by using one of Natural Language Inference (NLI) -based entailment checks and an inverse Retrieval Augmented Generation (RAG) -based method.

Regarding inverse Retrieval Augmented Generation (RAG), it shall be noted that once a potential (preliminary) output or result has been generated or obtained by a ML model that is to be output to a customer A (or a first customer) for example, the inverse RAG component has the task to check if the information contained in the output or result is actually inferable, retrievable or derivable (or was inferred, retrieved or derived) from the original customer-owned data owned by the customer A. Only in case an intended output or result to be provided to a certain customer can be derived from the respective customer's data, it will become the final output or result. In case it cannot be derived from the respective customer's data, this means that it would have been leaked from some other customer's data, and hence it is prohibited to be output. In doing so, it is guaranteed that no other-customers'-data is exposed, i.e. it is guaranteed that no data of a customer B (or a second customer) is exposed to a customer A.

Hence, customer privacy preservation is improved.

According to several examples of the present disclosure, the method may further comprise: determining whether a fine-tuning of the ML model is worthwhile for the customer; and performing the fine-tuning of the ML model by using the fine-tuning method if it is determined that the fine-tuning of the ML model is worthwhile. The fine-tuning may be determined to be worthwhile, if the ML model is expected to be enhanced with additional knowledge based on the fine-tuning.

It should be noted that in general, fine-tuning may be time-consuming and thus expensive. Thus, a fine-tuning may only be performed, if a benefit to be expected from the fine-tuning is considered to be worth the required time, i.e. the fine-tuning may be determined to be worthwhile. One aspect to consider whether a fine-tuning may be advantageous, beneficial or worthwhile is whether the ML model is expected to be enhanced with additional knowledge, i.e. whether the ML model may be improved for example.

Hence, costs and time for a fine-tuning may only be spent if a certain benefit is to be expected. Thus, resource efficiency in the training phase is improved.

According to several examples of the present disclosure, the customer may be a first customer or such customer A as mentioned above. The customer engineering data and/or the customer project data may be associated with the first customer or the customer A and no second customer, i.e. for example no such customer B as mentioned above. For example, the customer engineering data and/or the customer project data may only be associated with the first customer or the customer A and no other customer. The customer engineering data and/or the customer project data may comprise engineering data from one or more engineering projects of the first customer (customer A) and no engineering data from an engineering project of the second customer (customer B), i.e. and no engineering data from an engineering project of any other customer.

Hence, data privacy is even further increased.

According to several examples of the present disclosure, the customer engineering data may be probability distributed customer engineering data, in that different information, that are included in the customer engineering data and that are associated with the customer, occur with different probabilities.

By probability distributed customer engineering data it is meant here a "probability distribution", and not in the sense of "distributed across customers". For example, "probability distribution" in the sense of how many symbols of type A, how many symbols of type B, how many symbols of a further type etc. This may yield for example a Gaussian distribution or normal distribution. Such distribution may be considered in the ML model training and inference phases to avoid bias. For example, if in the training data, there were 10.000 symbols of type A and only very few of type B, then the ML model would very like learn, that "almost always" type A is true, no matter what the symbol looks like. In order to avoid this, the probability distribution helps to balance this. This may be considered by the probability distributed customer engineering data. That is why and how, for example, a "federated averaging" mechanism may be needed to balance (i.e., account for) such, sometimes strongly-biased, distributions.

According to several examples of the present disclosure, the method may further comprise: identifying a probability distribution of the probability distributed customer engineering data by using a distribution identifier component. The method may further comprise unifying and/or scaling the probability distribution of the probability distributed customer engineering data by using a data-selection-based distribution-unifier and/or data-selection-based distribution-scaler. The method may further comprise training the ML model on the unified and/or scaled probability distributed customer engineering data.

Hence, probability distributed customer engineering data may be processed and used for training purposes more efficiently and more appropriately. Thus, performance of the ML model is further increased.

According to several examples of the present disclosure, if it is verified that the information were obtained from the customer project data, the method may further comprise providing the information. For example, it may be verified or determined that the information were only obtained from the customer project data and from no project data of another customer. And if it is verified that at least part of the information was not obtained from the customer project data, the method may further comprise not providing the information. For example, it may be verified or determined that at least part or a piece of the information was not obtained from the customer project data, i.e. it may not be excluded or there may be a chance that the at least part or the piece of the information was obtained from project data of another customer. For example, the chance that the at least part or the piece of the information was obtained from project data of another customer may be above a predetermined threshold value, for example the chance may be above 0% (similar, it may be excluded with less than 100% certainty that the at least part or the piece of the information was obtained from project data of another customer).

Hence, compliance with data privacy requirements is even further improved.

According to several examples of the present disclosure, the customer may be a first customer or such customer A as mentioned above. If it is verified that the information were obtained from the customer project data that are associated with the first customer and no second customer (such customer B as mentioned above for example), i.e. no other customer, the method may further comprise providing the information to the first customer. If it is verified that at least part of the information was obtained from further customer project data that are associated with the second customer, i.e. any other customer, and not with the first customer, the method may further comprise not providing the information to the first customer.

Hence, compliance with data privacy requirements is even further improved.

According to a second aspect, there is provided a data processing apparatus. The data processing apparatus comprises one or more processors being configured to carry out the method of the first aspect.

According to a third aspect, there is provided a data processing system. The data processing system comprises a data processing apparatus of the second aspect. Additionally or alternatively, the data processing system comprises means for carrying out the method of the first aspect.

According to a fourth aspect, there is provided an industrial plant comprising a data processing apparatus of the second aspect and/or a data processing system of the third aspect.

By "industrial plant", according to several examples, it may be meant an industrial plant, autonomous industrial plant or industrial production plant, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

According to a seventh aspect, there is provided a use of at least one of the trained ML model of the first aspect, the method of the first aspect, a data processing apparatus of the second aspect, a data processing system of the third aspect, an industrial plant of the fourth aspect, a computer-readable medium of the fifth aspect, and a computer program product of the sixth aspect.

Each of the method of the first aspect, the data processing apparatus of the second aspect, the data processing system of the third aspect, the industrial plant of the fourth aspect, the computer-readable medium of the fifth aspect, the computer program product of the sixth aspect and the use of the seventh aspect is advantageous in several ways. Namely, each of these aspects is advantageous in that it may participate in enabling to overcome the problem of limited data for training of a ML model while at the same time obeying to the given constraints, like customer privacy constraints in an industrial context for example. It is thus enabled to train a ML model on data from different customers, for example distributed customers (in the meaning of probability distributed customers or customer data) and/or customers from EN and PI, by using Federated Learning, which simplifies access to private data. Furthermore, it is enabled to efficiently handle training efforts by using fine-tuning methods, for example Parameter-efficient Fine-Tuning (PEFT) methods, which dramatically reduces bandwidth without exposing the entirety of model weights of the ML model to be fine-tuned, but instead only the "PEFT-Low-Rank-Adapters" or similar. Moreover, it is enabled to guarantee customer data privacy, for example in that during inference of the ML model (i.e. in the usage phase) no data from a customer A (or a first customer), on which the ML model was trained, is leaked to a customer B (or a second customer).

Optional features of the first aspect may form part of any of the second to seventh aspects, mutatis mutandis.

The computer-readable medium of the fifth aspect may have stored thereon the computer program product of the sixth aspect.

The term "obtaining", as used herein, may comprise, for example, receiving from another system, apparatus, (AI/ML) model or process; receiving via an interaction with a user; loading or retrieving from storage or memory; measuring or capturing using sensors or other data acquisition apparatuses, receiving or acquiring as a result from one or more data processing steps.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates an example for an Al-based approach to structure and formalize multimodal unstructured process design information according to several examples of the present disclosure;
- Figure 2 illustrates a setup for Federated Learning with PEFT, Customer Privacy Preservation, and Entailment Checking according to several examples of the present disclosure;
- Figure 3 illustrates a further aspect of the setup according to Figure 2 according to several examples of the present disclosure;
- Figure 4 illustrates a flowchart indicative of a method according to several examples of the present disclosure; and
- Figure 5 illustrates a block diagram schematically showing a data processing apparatus according to several examples of the present disclosure.

### DETAILED DESCRIPTION

In an industrial context, Automation Engineering of a process automation system is still a very manual effort due to limited support for the interpretation and processing of process design specification documents.

Currently, artificial intelligence and/or machine learning (AI/ML)-based models for use in an industrial context are developed to structure and formalize multimodal unstructured process design information as, for example, in PDF, Excel, and Word formats and to make it available for state-of-the-art engineering tools for the long-known "Automation of Automation".

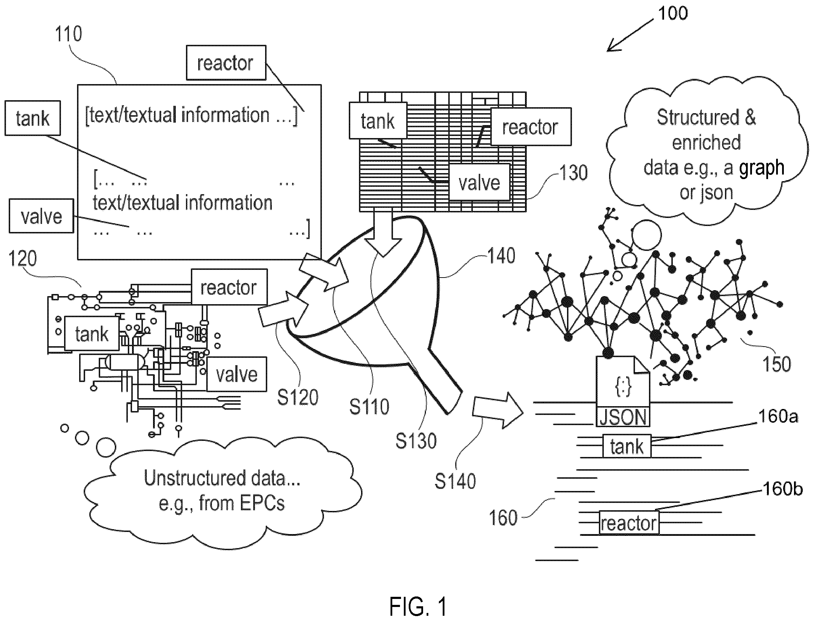

An example for such AI/ML-based models is schematically illustrated in Figure 1, wherein the example as shown in Figure 1 is provided for explanation purposes and is not intended to limit the present disclosure on such system and/or ML model as illustrated in Figure 1.

In more detail, Figure 1 shows an Al-based approach and prototype, an "Engineering Data Funnel" (EDF) 140, that is currently developed by the present inventors to structure and formalize multimodal unstructured process design information as, for example, in PDF, Excel, and Word formats and make it available for state-of-the-art engineering tools for the long-known "Automation of Automation". Several examples of the present disclosure may be described by the example of the EDF 140, however, it has to be noted that the method, data processing apparatus and system (as well as computer program product, computer-readable medium, industrial plant and use) as disclosed herein according to several examples of the present disclosure are transferable, applicable or useable to/for other (generative) Al-related projects and applications.

Thus, referring now to Figure 1, Figure 1 illustrates an example for an Al-based approach to structure and formalize multimodal unstructured process design information according to several examples of the present disclosure. Said in other words, Figure 1 illustrates the EDF 140, which may be understood as being an artificial intelligence (Al) -based information processing system to process input data or input documents, for example engineering design specification documents, into a comprehensive structured representation according to several examples of the present disclosure.

In more detail, the EDF system 100 according to Figure 1 illustrates three different types of examples for input documents or engineering design specification documents, a first specification document 110 comprising textual information, a second specification document 120 comprising an image or topology image of several connected symbols and a third specification document 130 comprising a table. The specification documents 110, 120 and 130 may be understood as input documents, which are inputted to the EDF 140. The specification documents 110, 120 and 130 may be of data formats, for example the first specification document 100 may be in Word format, the second specification document 120 may be in PDF format and the third specification document 130 may be in Excel format. However, the specification documents are not limited to these types of formats. In general, it may be said that the specification documents 110, 120 and 130 may represent unstructured data, for example obtained from EPCs.

Each of the specification documents 110, 120 and 130 comprises one or more pieces of information. For example, among others, the first specification document 110 comprises pieces of information, i.e. textual information, related to a tank, a reactor and a valve. Further, among others, the second specification document 120 comprises pieces of information, i.e. connected symbols, related to a tank, a reactor and a valve. Moreover, among others, the third specification document 130 comprises pieces of information, i.e. content in rows, columns or cells of a table, related to a tank, a reactor and a valve.

The specification documents 110, 120 and 130 are input (in steps S110, S120 and S130 as indicated in Figure 1) to the EDF 140 and are processed by the EDF 140. As a result of the processing, the EDF 140 outputs, in S140, a structured representation.

At the processing in the EDF 140, the pieces of information, i.e. tank, reactor and valve, are identified in the specification documents 110, 120 and 130.

The structured representation obtained from the EDF 140 may be understood to represent a representation of the joint information obtainable from the specification documents 110, 120 and 130. Alternatively, the structured representation obtained from the EDF 140 may be understood to represent a respective structured representation corresponding to each of the specification documents 110, 120 and 130. As a mere example only for improving understandability, the EDF 140 may have identified from the second specification document 120 based on image processing that a tank may be connected to a valve and that the valve may further be connected to a reactor. However, since the second specification document 120 may be of a low quality, for example the image may be pixelated, the connection of the tank to the reactor via the valve may be of low certainty. From the first specification document 110, the EDF 140 may learn for example with a higher certainty that the tank is indeed connected to the reactor via the valve, and from the third specification document 130, the EDF 140 may learn for example with a specific certainty a possible type of the tank and a possible type of the reactor. Thus, for example, the structured representation, which may be understood as a target structured representation, may comprise with comparatively higher certainty that a tank is connected to a reactor via a valve and that said tank and reactor may be of a certain type.

In general, one or more structured representations may be output by the EDF 140 in different ways or formats, for example in a structured visualization 150 or a structural textual information 160, like a JSON file.

In more detail, the EDF 140 or EDF system 100 may include (among others) a vision model trained to recognize components and/or symbols and connections in input documents, for example in P&ID documents like the first and second specification documents 110 and 120, for example as PDF files, image files. Additionally or alternatively, the EDF 140 or EDF system 100 may include a language model trained to process text in Control Narratives documents, for example in input documents like the specification documents 110, 120 and 130, for example, among others, in PDF files, texts, text files, or tables.

In the above-outlined example, the specification documents 110, 120 and 130 may be associated with a same customer and may be associated with customer engineering data from customer project data that are associated with a same customer, for example a first customer or a customer A. Further, the specification documents 110, 120 and 130 may only be associated with a same customer and may thus not be associated with any further customer, i.e. there is no association with a second customer or a customer B.

However, in a usage or inference phase of the EDF 140, in case the specification documents 110, 120 and 130 were associated with different customers (which is however rather unlikely), for example with a first customer and at least a second customer that may operate similar industrial plants, such combined or joint processing of the specification documents 110, 120 and 130 in the EDF 140 as outlined above may not be allowed due to customer data privacy requirements or customer data privacy constraints. Or, said in other words, such combined or joint processing of the specification documents 110, 120 and 130 in the EDF 140 as outlined above may violate customer data privacy requirements or customer data privacy constraints in case the specification documents 110, 120 and 130 were associated with different customers.

However, this may be of much higher relevance in the training phase of the EDF 140. For example, it may be assumed that the above-outlined process of the joint processing of the specification documents 110, 120 and 130 occurs in the training of the EDF 140. Said in other words, training data to train the EDF 140 may comprise the specification documents 110, 120 and 130. There may then be a conflict with customer data privacy requirements or customer data privacy constraints, if the specification documents 110, 120 and 130 were associated with different customers.

Hence, there is need for improvement.

According to several examples of the present disclosure, to further advance the EDF 140 for processing a broad range of engineering design specification documents from PA-PI and PA-EN, the EDF base models need to be trained on further customer data. The EDF base models may only understand the domain to a limited, or so-far-labelled extend and it may thus be needed to overcome shortage of training data, while at the same time to obey to customers' data privacy constraints. Thus, customer data privacy may block from further training the EDF 140 or Al/ML models in general.

Therefore, according to several examples of the present disclosure, it is disclosed to combine Federated Learning on distributed customer data with generative AI and Parameter-efficient Fine-Tuning (PEFT) methods, and to furthermore apply methods for Customer Data Privacy Preservation, like Differential Privacy and Homomorphic Encryption or AutoEncoders for example, in order to train P&A Engineering ML models on confidential customer data from PA-EN and PA-PI businesses, while guaranteeing that no confidential data from a first customer is accidentally leaked during ML model inference to a second customer. An additional, filtering, entailment checking, or inverse generative AI confirmation component may check that all ML-model-inferred information were actually found in the respective customer's project data (and not in project data from another customer).

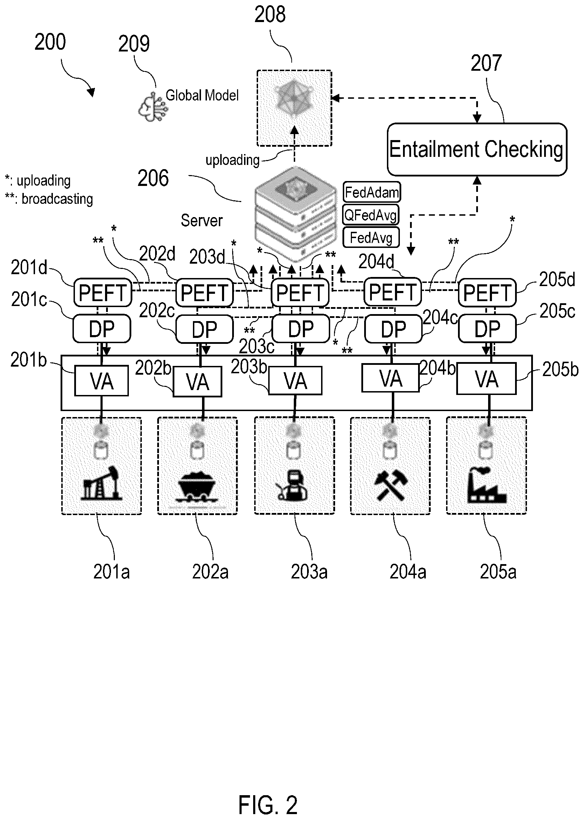

According to several examples of the present disclosure, it is dealt with the problem of training AI systems on customer data, and at the same time of guaranteeing that no other customers' data is exposed to respective other customers. ML Models may thus be trained on Distributed Customer (Engineering-) Data using Federated ML, with Customer-Privacy-Preservation Mechanisms and with Enhanced Entailment-Checking, so that no confidential Customer Data is unwillingly exposed, as schematically illustrated in Figure 2.

Figure 2 illustrates a setup for Federated Learning with PEFT, Customer Privacy Preservation, and Entailment Checking according to several examples of the present disclosure. For example, five different customers 201 a, 202a, 203a, 204a and 205a are illustrated that are each associated with respective customer data and respective customer's project data. For each customer, acquired data are subjected to a value assessment (VA) or a respective VA 201b, 202b, 203b, 204b and 205b, i.e. it is determined whether a fine-tuning may be worthwhile, are subjected to a DP or respective DP 201c, 202c, 203c, 204c and 205c, and may be subjected to a PEFT or respective PEFT 201d, 202d, 203d, 204d and 205d before they are stored at/uploaded to a server 206, for example for the training phase of the ML model 209. In a usage or inference phase of the ML model 209, an Entailment Checking (or e.g., Inverse RAG Confirmer) 207 may be applied to verify whether an output 208 that is to be output to customer 201a for example, is only derivable from data acquired from the customer 201a. The Global Model 209 as illustrated with reference to Figure 2 may be such EDF 140 as illustrated with reference to Figure 1, for example.

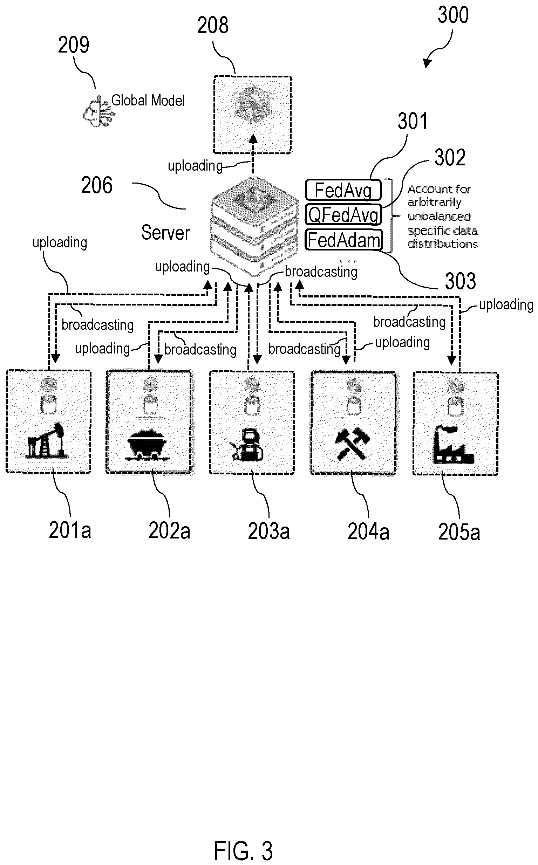

In Figure 2, arrows directing from clients/customers 201a to 205a to server 206 indicate uploading from clients/customers 201a to 205a to server 206, wherein arrows directing from server 206 to clients/customers 201a to 205a indicate broadcasting from server 206 to clients/customers 201a to 205a. These arrows are better visible in Figure 3.

In more detail, according to several examples of the present disclosure, for the training phase, through Federated Learning, with applied Differential Privacy, model weights may have noise added to all parameters in order to make data recovery more difficult to even impossible. Adding furthermore methods like Encryption, or AutoEncoders for dimensionality-reduction, i.e. only send the reduced embedding layers for example, can make it even harder to recover confidential data. For the inference phase, besides this, an additional filter may be added, an "Entailment Checking" or "Inverse-RAG"-similar system, to only allow LLM-outputs to a certain customer, which really can only be derived from given data of such specific customer, will guarantee that no other-customers'-data is exposed. Similar, LLM-outputs are not allowed, which can not only be derived from given data of one specific customer.

Therefore, according to several examples of the present disclosure, the following technologies may be used: Federated Generative Al with i) Assessment of the Value (VA) of Customer-side Fine-Tuning for the Overall Model's Knowledge, ii) Parameter-efficient Fine-Tuning, for example PEFT-LoRA method, or alternative methods, iii) Customer Privacy Preservation, for example using DP, etc., and iv) "Entailment-Checking"-based or "Inverse RAG"-based Confirmation.

According to several examples of the present disclosure, said in other words, there is disclosed to combine Federated Learning with Generative Al and PEFT methods, and furthermore to apply methods for Customer Data Privacy Preservation, for example Differential Privacy and Homomorphic Encryption or AutoEncoders. In order to train P&A Engineering ML models, for example such EDF 140 according to Figure 1, on confidential customer data from PA-EN and PA-PI businesses, in order to guarantee that no confidential data from a first customer is accidentally leaked during ML model inference to a second customer. An additional generative AI Entailment Checking component or "Inverse RAG" component may check that all ML-model-inferred information were actually found in the respective customer's project data, and only then allow for a further processing or exposing of the ML-model-inferred information, for example as part of a generated output of the ML model.

In the proposed setup according to several examples of the present disclosure, it may, optionally, be check for each customer, for example with respect to its private data, on the embedding representation level, if a fine-tuning on the customer's data is worthwhile, i.e., will enhance the overall model with "additional knowledge" or not, as Value Assessment (VA). In the case when fine-tuning shall be done, i.e., is worthwhile with positive VA, then PEFT will help to reduce computational efforts and bandwidth. DP, for example, with calibrated noise, will take care of being able to guarantee, and promote officially, customer data privacy preservation. "Entailment Checking" or "Inverse RAG" may check that all ML-model-inferred information were actually found in the respective customer's project data.

According to several examples of the present disclosure, in the disclosed method or system setup, for PEFT, DP and Entailment Checking / Inverse RAG, there is explicitly no limitation of the processing of data and ML model training and ML model inference to a single engineering project, but rather to a single customer's selection or set of engineering projects or even to all of a single customer's engineering projects. This means, that for example a first customer or customer A should benefit from ML model training on the first customer's (comprehensive set of) several engineering projects' engineering data. And it may only be important that this first customer's data and/or knowledge is not exposed to another customer, for example a second customer or a customer B, but - opposed to this - while handling other projects of the first customer, the gained data and/or knowledge should be accessible.

According to several examples of the present disclosure, in more detail, to check whether or not fine-tuning on the customer's data is worthwhile, i.e., will enhance the overall model with "additional knowledge", it should be considered the respective customer's data distributions. Therefore, it may be checked the embedding representations of the training data for the base model and the respective (private) training data of a certain customer, for example customer X, and compare these. It may then be accounted for overlap or differences in the embedding representations, for example with regard to density and/or sparsity of clusters of embedding representations, or the respective inner-cluster-distances or inter-cluster distances. Furthermore, it may also be needed to compare the knowledge depth of the cluster, irrespective of whether two clusters are equally distributed or not. This may help to know if there is enough knowledge already existing with the embedding model or not. Then, thereon-based, fine-tuning on the customer X's (private) data, may be particularly beneficial and may thus expand the overall model's capabilities, if the clusters differ, for example in density, sparsity, inner/inter-cluster distances, etc. Said in other words, if these metrics are very similar, then fine-tuning will bring fewer benefits only, and only if they are rather different, then fine-tuning will bring benefits and may thus be regarded as valuable. It shall be noted that this checking whether a fine-tuning may be worthwhile represents an optional step that may happen on the customer side, so that no private training data is exposed.

According to several examples of the present disclosure, alternatively to PEFT, with PEFT as a class of methods as outlined below in detail, with the benefit of allowing for less computational efforts and lower bandwidth, for example in exchanging model weights with customers, there are also other methods, like, for example, "model pruning", as mentioned here as a class of methods as outlined below in detail, where the pruned-away edges may need to be made sure to be the same, i.e. consistent, over all distributed customers, thereby having the same positive effects on computation and bandwidth.

PEFT may comprise additive methods, adapters methods, selective methods, soft prompts methods and reparametrization-based methods, as explained in more detail, for example, in the document V Lialin, V Deshpande, A Rumshisky; "Scaling down to scale up: A guide to parameter-efficient fine-tuning", arXiv:2303.15647v2, 22. November 2024.

Pruning may be understood as a process of removing weight connections in a neural network to decrease a storage size of the ML model and to increase inference speed of the ML model.

According to several examples of the present disclosure and with reference to Figure 3, which illustrates a further aspect of the setup according to Figure 2, the following is to be noted regarding data distribution consideration. Namely, to account for, potentially unknown, arbitrarily unbalanced specific data distributions on the respective customer's side, it may be enhanced the setup 200 as illustrated according to Figure 2 using methods like Federated Averaging (FedAvg) 301, Q-Federated-Averaging (QFedAvg) 302, or Federated Adam (FedAdam) 303, etc. Furthermore, according to several examples of the present disclosure, the system 300 according to Figure 3 may include a distribution identifier component on the customer side, without the risk of exposing private customer data, and a data-selection-based distribution-unifier and/or -scaler, to account for unequal and/or unbalanced distributions. For example, it could be allowed to generally weigh PA-EN customer data and thereon-based models, or model components such as LoRA matrices, stronger than PA-PI customer data, to account for the customer/business ratio, for example, EN: 80%, PI: 15%, MP: 5%, wherein MP may represent an example division of Process Automation, for example Marine & Ports.

According to several examples of the present disclosure, the provided solutions enable to:
- train AI/ML-based models, for example the EDF 140 according to Figure 1, on data from different customers, even from "distributed" customers in the meaning of "probability distributed" as outlined above, and from EN and PI for example, using Federated Learning, which simplifies access to private data;
- efficiently handle training efforts using PEFT-methods, for example for reducing bandwidth, without exposing the ML model;
- guarantee customer data privacy, i.e., no data from a first customer, on which the ML model was trained for example, is leaked to a second customer, during inference using the ML model.

Therefore, according to several examples of the present disclosure, there is provided Federated Generative AI with industry-specific AI/ML models, which are not necessarily foundation models, for training generative AI models on distributed customer data. It is further provided an optional step for checking and assessing, based on the respective customer's data on the embedding representation level, the value of fine-tuning the overall ML model in terms of whether or not fine-tuning would enhance the overall model with "additional knowledge" or not. There is further provided Parameter-efficient Fine-Tuning or equivalent methods, for decreasing computational efforts and bandwidth on the customer side, guaranteed Customer Privacy Preservation, and "Entailment Checking" or "Inverse RAG" Confirmation, for P&A Engineering Customers and their (Engineering Design Specification) Data.

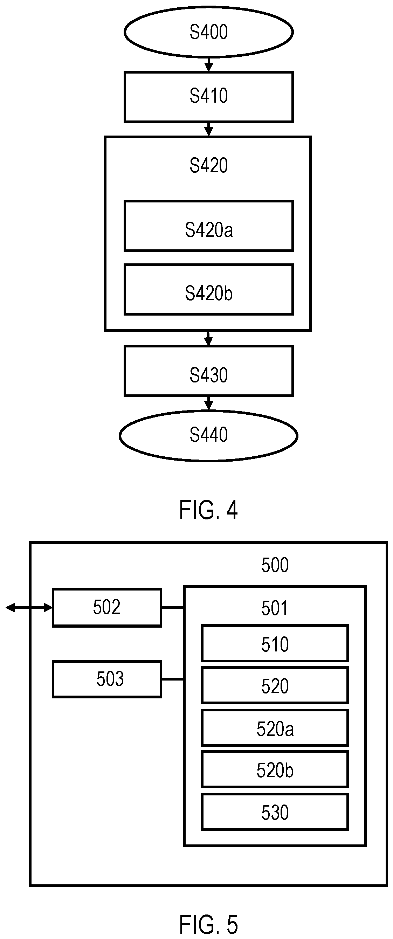

Referring now to Figure 4, Figure 4 illustrates a flowchart indicative of a method according to several examples of the present disclosure. The method is for training and using a ML model on customer engineering data with increased customer privacy preservation in an industrial context. The ML model may be such EDF 140 as illustrated with reference to Figure 1 and/or such Global Model 209 as illustrated with reference to Figure 2. The customer engineering data may comprise such specification documents 110, 120 and 130 as illustrated with reference to Figure 1.

The method starts in S400.

In a training phase of the ML model:
In S410, the method comprises obtaining the customer engineering data from customer project data associated with a customer. The customer may be one of such customers 201a to 205a as illustrated in Figure 1.
In S420, the method comprises training the ML model on the customer engineering data by using Federated ML.

As part of the training in S420, in S420a (indicated as S420a for reasons of understandability to illustrate that the fine-tuning is part of the training), the method may optionally comprise fine-tuning the ML model by using a fine-tuning method, for example PEFT (201d, 202d, 203d, 204d, 205d) as illustrated in Figure 2. For example, according to several examples of the present disclosure, the fine-tuning may be performed if determined to be worthwhile, as outlined above with reference to Figures 2 and 3 for example.

As further part of the training in S420, in S420b (indicated as S420b for reasons of understandability to illustrate that the applying is part of the training), the method comprises applying customer privacy preservation mechanisms on information inferred by the ML model, for example DP (201c, 202c, 203c, 204c, 205c) as illustrated in Figure 2.

When using the ML model for inference:
In S430, the method comprises verifying, by using an Entailment Checking method, that the information inferred by the ML model and determined by the ML model to be associated with the customer were obtained from the customer project data. An example for the Entailment Checking 207 as illustrated in Figure 2 is the application of an Inverse RAG Confirmer.

The method ends in S440.

Referring now to Figure 5, Figure 5 illustrates a block diagram schematically showing a data processing apparatus 500 according to several examples of the present disclosure. In particular, according to several examples of the present disclosure, there is provided a data processing apparatus 500 for training and using a ML model on customer engineering data with increased customer privacy preservation in an industrial context. The data processing apparatus 500 comprises one or more processors 501 being configured to carry out the method as indicated according to Figure 2 or 3 and/or to carry out the method as outlined above with reference to Figure 4.

According to several examples of the present disclosure, the data processing apparatus 500 may comprise means to function as such EDF 140 as outlined above with reference to Figure 1.

In more detail, according to various examples, a data processing apparatus 500 being configured to carry out the method of Figure 4 may comprise a processing circuitry, a processing function, a processing means, a processing unit or a processor 501, which enables the data processing apparatus 500 to participate in training and inferring a ML model on customer engineering data with increased customer privacy preservation in an industrial context. The processor 501 may comprise one or more processing portions or functions, wherein the processing portions or functions may be provided as one or more physical or virtual entities. The data processing apparatus 500 may comprise one or more communication interfaces 502. The data processing apparatus 500 may further comprise a memory or memory unit 503 for storing data, programs and/or instructions to be executed by the processor. The memory 503 may be a memory internal to the data processing apparatus 500 or may be a memory external to the data processing apparatus 500, for example at a cloud server. The processor 501 may comprise one or more portions, which enable the data processing apparatus 500 to execute the method of Figure 4 for example. According to several examples of the present disclosure, an obtaining portion 510 may be configured to perform such obtaining according to S410 of Figure 4, a training portion 520 may be configured to perform such training according to S420 of Figure 4, a fine-tuning portion 520a may be configured to perform such fine-tuning according to S420a of Figure 4, an applying portion 520b may be configured to perform such applying according to S420b of Figure 4, and a verifying portion 530 may be configured to perform such verifying according to S430 of Figure 4.

According to several examples of the present disclosure, the respective portions of the data processing apparatus 500 may also be understood as means for carrying out the certain function.

According to several examples of the present disclosure, there is provided a data processing system for training and inferring a ML model on customer engineering data with increased customer privacy preservation in an industrial context. The data processing system comprises the data processing apparatus 500 according to Figure 5 and/or comprises means for carrying out the method according to Figure 4. The system may be such system 200 or 300 as illustrated according to Figures 2 and 3.

According to several examples of the present disclosure, there is provided an industrial plant comprising the data processing apparatus 500 according to Figure 5 and/or the data processing system as outlined above. The industrial plant may be the industrial plant for which the ML model is trained and/or for which the trained ML model is used or inferred.

According to several examples of the present disclosure, there is provided a computer-readable medium comprising instructions which, when executed by a computing system, causes the computing system to perform the method as indicated above with reference to Figure 2 or 3 and/or to perform the method as outlined with reference to Figure 4. The computer-readable medium may be transitory or non-transitory, volatile or non-volatile.

According to several examples of the present disclosure, there is provided a computer program product comprising instructions which, when executed by a computing system, enable or cause the computing system perform the method as indicated above with reference to Figure 2 or 3 and/or to perform the method as outlined with reference to Figure 4. The computer program product may comprise a computer-readable medium comprising instructions of the computer program product. The computer-readable medium as mentioned above may have stored thereon the computer program product.

According to several examples of the present disclosure, there is provided a use of the data processing apparatus 500, the data processing system as outlined above, the industrial plant as outlined above, the computer-readable medium as outlined above, and/or the computer program product as outlined above. In particular, there is provided use of the method as outlined with reference to Figure 4 to train and use a ML model in an industrial context with increased customer privacy preservation.

Optional features of the method as outlined with reference to Figure 2, 3 or 4 may form part of the data processing apparatus 500, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for training and using a machine learning, ML, model on customer engineering data with increased customer privacy preservation in an industrial context, the method comprising:
in a training phase of the ML model,
obtaining (S410) the customer engineering data from customer project data associated with a customer;
training (S420) the ML model on the customer engineering data by using federated ML;
applying (S420b) customer privacy preservation mechanisms on information inferred by the ML model; and
when using the ML model for inference,
verifying (S430), by using an Entailment Checking method, that the information inferred by the ML model and determined by the ML model to be associated with the customer were obtained from the customer project data.

2. The method according to claim 1, wherein the method further comprises: fine-tuning (S420a) the ML model by using a fine-tuning method,
wherein the fine-tuning the ML model by using a fine-tuning method comprises fine-tuning the ML model by using one of Parameter-Efficient Fine-Tuning, PEFT, Low Rank Adaptation-PEFT, LoRA-PEFT, and pruning.

3. The method according to claim 1 or 2, wherein the applying the customer privacy preservation mechanisms comprises applying one of Differential Privacy, DP, Homomorphic Encryption, and AutoEncoders.

4. The method according to any of claims 1 to 3, wherein the verifying by using the Entailment Checking method comprises verifying by using one of Natural Language Inference, NLI, -based entailment checks and an inverse Retrieval Augmented Generation, RAG, -based method.

5. The method according to any of claims 2 to 4, further comprising:
determining whether a fine-tuning of the ML model is worthwhile for the customer; and
performing the fine-tuning of the ML model by using the fine-tuning method if it is determined that the fine-tuning of the ML model is worthwhile,
wherein the fine-tuning is determined to be worthwhile, if the ML model is expected to be enhanced with additional knowledge based on the fine-tuning.

6. The method according to any of claims 1 to 5,
wherein the customer is a first customer, and
wherein the customer engineering data and/or the customer project data are associated with the first customer and no second customer, and
wherein the customer engineering data and/or the customer project data comprise engineering data from one or more engineering projects of the first customer and no engineering data from an engineering project of the second customer.

7. The method according to any of claims 1 to 6, wherein the customer engineering data are probability distributed customer engineering data, in that different information, that are included in the customer engineering data and that are associated with the customer, occur with different probabilities.

8. The method according to claim 7, further comprising:
identifying a probability distribution of the probability distributed customer engineering data by using a distribution identifier component;
unifying and/or scaling the probability distribution of the probability distributed customer engineering data by using a data-selection-based distribution-unifier and/or data-selection-based distribution-scaler; and
training the ML model on the unified and/or scaled probability distributed customer engineering data.

9. The method according to any of claims 1 to 8, wherein
if it is verified that the information were obtained from the customer project data, the method further comprises providing the information, and
if it is verified that at least part of the information was not obtained from the customer project data, the method further comprises not providing the information.

10. The method according to claim 9, wherein the customer is a first customer, and
if it is verified that the information were obtained from the customer project data that are associated with the first customer and no second customer, the method further comprises providing the information to the first customer, and
if it is verified that at least part of the information was obtained from further customer project data that are associated with the second customer and not with the first customer, the method further comprises not providing the information to the first customer.

11. A data processing apparatus (500) comprising one or more processors being configured to carry out the method according to any of claims 1 to 10.

12. A computer program product comprising instructions which, when executed by a computing system, enable and/or cause the computing system to perform the method according to any of claims 1 to 10.

13. A computer-readable medium having stored thereon the computer program product according to claim 12.

14. Use of the ML model as obtained according to the training phase according to claim 1 for processing customer engineering data with increased customer privacy preservation in an industrial context.
